# EUROPEAN PATENT SPECIFICATION

(11) **EP 2 134 545 B1**
(45) Date of publication and mention of the grant of the patent: **29.09.2010**
(21) Application number: 07786095.5
(22) Date of filing: 16.07.2007
(51) Int. Cl.: B32B 27/32, G09F 3/02

(54) **FILMS FOR LABEL FACESTOCK**
FOLIEN FÜR ETIKETTENTRÄGERMATERIAL
FILMS POUR ÉTIQUETTES

(43) Date of publication of application: 23.12.2009
(73) Proprietor: RKW SE, 67227 Frankenthal (DE)
(72) Inventor: GREFENSTEIN, Achim, 67122 Altrip (DE); HERRANEN, Marita, 28100 Pori (FI); MÄKITALO, Tapio, 28630 Pomarkku (FI)
(74) Representative: Wagner, Jutta
(86) International application number: PCT/EP2007/006293
(87) International publication number: WO 2009/010079

(56) References cited:
- EP-A- 1 759 833
- US-A1- 2003 148 132
- US-A1- 2004 033 349

## Description

The present invention relates to films suitable for the manufacture of labels.

Labels consist generally of a label facestock, an adhesive and a release liner. Usually, the facestock is prepared, then coated with adhesive and brought together with the release liner. Subsequently, the labels are die-cut, the matrix of label facestock is stripped off and the label positioned on the liner wound on a roll or stored otherwise. The actual labelling of substrates is achieved mechanically by guiding the label on the release liner around an edge whereby the label separates from the liner and is transferred to the substrate. This requires a sufficient stiffness of the label facestock.

On the other hand the label has to conform smoothly to the contour of the substrate also when this is curved or bent and even to flexible substrates like squeezable plastic bottles and the like during the actual deformation. Further requirements are transparency, gloss, printability of the surface and of course low cost of material and manufacture of the labels.

Today most conformable polymeric label facestock films are made of low density polyethylene (LDPE) with a minor addition of high density polyethylene (HDPE) or polypropylene (PP) in the formulation in thicknesses between 80 and 100 µm in the blown or cast film process.

There have been numerous proposals for down-gauged facestock materials (<70 µm) meeting either all requirements to a certain extent or some very well and others only poorly or not at all. Most of them rely on multilayer material.

US 4,713,273 proposes to use a multilayer facestock comprising a coextrudate of a relatively thick core or base layer with at least one thinner skin layer. As core, there is preferred a polyethylene or polypropylene or polypropylene copolymer with a flexural modulos of 896 to 1724 MPa (130,000 to 250,000 psi) at 23°C (73 °F), and as skin layer polyethylenevinylacetate or polyvinylchloride is preferred. The core provides stiffness and the skin printability. This material is difficult to recycle.

According to US 5,516,393 a core made of a blend of polypropylene and EVA/polyethylene and a skin of a blend of polypropylene/EVA is used. Further label materials with PE skin and a core of mainly PP are described in DE 101 47 538 and DE 102 28 273. For sufficient bonding of the coextruded core and skin layers it is necessary to provide sophisticated tie layer formulations between them. This is requiring a 5-layer extrusion equipment.

It is further known to increase the stiffness of films by stretching, either in one or in two directions. One example is US 5,186,782, describing mono- and multilayer films which are stretched in one direction to achieve a stiffness of 20 to 45 Gurley (Stiffness is measured per TAPPI Gurley stiffness test T-543), while in the other direction stretching is omitted or much less so that the stiffness in the transverse direction is 75 % or less of the stiffness in the first direction. Again, stretching is no simple step in production, the more so in cases requiring a specific stiffness to be reached exclusively by setting the right stretching conditions.

An important factor for the costs is the thickness of the films, down gaging, i.e. using thinner films, is restricted by the required stiffness.

Another consideration is the manufacturing. Blown films would be preferred because of the flexibility of the blow process, the usually lower scrap rate and the better overall economics compared to the casting process, but normally blown films show poorer thickness profiles than cast films. Furthermore, the transparency, when using high crystalline polymers like high densitiy polyethylene or polypropylene as stiffness promoters, is poorer due to the slower cooling, resulting in a higher crystallinity as compared to cast films.

Polypropylene is a material imparting good mechanical properties but often problems occur with the optical properties, such as high haze or poor gloss. Additionally, polypropylene is difficult to print necessitating a printable upper layer. Easily printable layers like LDPE are believed to lack sufficient adhesion if coextruded with a PP base layer.

US 2004/00333349 relates to machine direction oriented polymeric films made from a mixture containing propylene homo- or copolymer with an MFI of 6 to 30 and an olefinic elastomer with an MFI of 0.5 to 10. Although it is stated that the films may also be made by blown film extrusion, the melt properties of the materials would in this case lead to films with too high haze and also the dispensability and cuttability of the film used as label stock would be insufficient.

US 2003/0148132 describes label foils made of three layers whereby the core layer of polypropylene has a thickness from 5 to 20 times that of one skin layer. As material for the skin layers polyethylene, low density polyethylene, metallocene catalysed linear low density polyethylene, a mixture of low density and linear low density polyethylene, ethylene vinyl acetate copolymers and ethylene co- or terpolymers are mentioned. The only example uses high density polyethylene for the skin layers and a propylene homopolymer for the core layer. The document is silent with respect to printability and forsees the use of adhesive layers to achieve sufficient bonding. Thus it is not clear under which circumstances and with which materials it is possible to obtain directly printable skin layers that are coextrudable without tie layers. It is also thought necessary to provide a symmetrical structure with a thickness of the core layer that is not within the usually utilized ranges for blown films.

In WO 01/5378 a specific coupled polypropylene is suggested as material for blown film extrusion. Three layer films with skin layers from a special in-reactor blend of polyethylene are also described. While the films show good transparency they are not intended for label applications and lack sufficient stiffness as long as the core layer is not unusually thick. The coupled polypropylene and the special polyethylene are also expensive materials.

US 5,709,937 proposes machine direction oriented polypropylene homo- or copolymer films whereby the propylene copolymer is selected from copolymers with up to 10 % ethylene or up to 15 % 1-butene. The use of these copolymers is reported to result in excellent optical quality and the necessary stiffness is provided by stretching. Although it is stated that the films may also be made by blown film extrusion, the melt properties of most of the mentioned materials would lead to films with too high haze and also the dispensability and cuttability of the film used as label stock would be insufficient.

EP 1 514 893 discloses polyproyplene materials suitable to prepare blown films which show good mechanical properties and excellent optical properties. In this document it is additionally stated that multilayer films can be made without tie layers if a first layer of this polyproplylene is combined with a second layer of polyethylene made with a single site catalyst, i.e. a metallocene catalysed polyethylene. The document also mentions that other polyethylene materials need a tie layer for sufficient adhesion.

EP 1 759 833 discloses multilayer films compriding at least three layers, two outer layers and a core layer, each outer layer independently comprising at least 50 % by weight of a linear low density polyethylene component made with a metallocene catalyst (m-LLDPE) and having a density of less than 0.940 g/cm³ and an LDPE component whereby the core layer comprises a PP component and an m-LLDPE component. It is explicitly stated that due to a lack of overlap in processing windows a core of PP cannot be used with a skin of LDPE, the m-LLDPE is considered necessary in core and skin to ensure adhesion and prevent degradation. The use of m-LLDPE in the skin layer and/or the addition of ductile PP-Copolymers however leads to a bad die-cuttablity due to the high ductility of the film construction.

Generally, all down-gauged (<80 µm), stiff (>600 MPa tensile modulus in machine direction), and conformable (<1500 MPa tensile modulus in both directions) plastic label facestock materials on the market are showing a much worse die-cuttability compared to the widely used LDPE-based products that typically have 83 to 95 µm thickness.

Further, so far every new film construction has to be tested in real die cutting tests in order to determine whether they can be processed at high line-speeds, because of the lack of a suitable other test method.

It has now been found that measurement of the impact energy and maximum deflection in the Dynatest according to German DIN 53373 provides such a test method.

In a first aspect of the invention there is provided a method of assessing die cuttability of films by measurement of the impact energy and maximum deflection in the Dynatest according to German DIN 53373. Generally all multilayer films showing an impact energy of not more than 3 Nm/mm film thickness and a maximum deflection of not more than 5 mm are well suitable as label facestock material with respect to die-cutting.

These values are not achieved with the label materials like LDPE blown and cast films, downgauged PP-films with m-LLDPE at least partly in the skin layers or biaxially stretched films together with the other requirements like stiffness, conformability, transparency and printability.

Surprisingly it was now found that multilayer films with a core or base layer from polypropylene and a printable skin layer or skin layers from LDPE with a density of at least 0.93 g/cm³ or from a mixture of LDPE with other polymers increasing stiffness and reducing elongation or from a mixture of styrene-butadien-styrene-copolymers with polystyrene provide films that show the above mentioned requirements.

The invention thus also relates to multilayer films useful as labelstock that are printable, conformable and die cuttable, have a thickness of up to 80 µm, a tensile modulus of from 600 to 1500 MPa comprising a core or base layer from polypropylene comprising at least 50 % by weight of at least one of a polypropylene homopolymer, a polypropylene random copolymer or a heterophasic polypropylene copolymer and are directly bonded to a printable skin layer or skin layers at least one of which is printable and the skin layer(s) is (are) stiff and die cuttable and comprises (comprise) low density polyethylene with a density of at least 0.93 g/cm³ and less than 5 % by weight of metallocene linear low density polyethylene wherein the ratio of the thickness of the core or base layer to one skin layer is at least 1:1 and the impact energy is not more than 3 Nm/mm film thickness and the maximum deflection is not more than 5 mm.

The core or base layer comprises preferably at least 60 %, and most preferably at least 70 % of at least one of a polypropylene homopolymer, or a polypropylene random copolymer. The core layer does not contain a coupled polypropylene.

The core layer can consist only of PP homopolymer. Preferably the core or base layer comprises an amount of up to 80 % of polypropylene random copolymer and 20 to 100 % of polypropylene homopolymer. Particularly preferred are 5 % to 50% of polypropylene random copolymer.

Comonomers for the polypropylene random copolymer are ethylene or other α-olefins in an amount of up to 30 %, with respect to high stiffness less than 15 % or even less than 10 % being preferred. It is preferred to include at least 1 %, preferably at least 3 % and especially preferred at least 5 % comonomer.

The core or base layer may further comprise up to 50 %, preferably up to 35 % , especially preferably up to 25 % of linear low density polyethylene, low density polyethylene or high density polyethylene as long as the properties in the Dynatest are within the specified range.

Linear low density polyethylene (LLDPE) is a copolymer of ethylene with one or more α-olefin(s), like butene, hexene octene or the like. If the LLDPE is made on single site or metallocene catalysts special properties result. Those materials are designated m-LLDPE have linear structure and hence good compatibility with the polypropylene. However, they reduce stiffness and increase significantly ductility which leads to worse die-cutability.

The skin layers are preferably from LDPE with a density of at least 0.93 g/cm³ or from a mixture of LDPE with other thermoplastic polymers increasing stiffness and reducing elongation or from a mixture of styrene-butadien-styrene-copolymers with polystyrene or from high density polyethylene. The skin layer or skin layers contain less than 5 % by weight of linear low density polyethylene.

In a first embodiment skin layer or skin layers comprise a LDPE with a density of at least 0,93 g/cm³, preferably at least 0,932 g/cm³. This material is also called medium density LDPE, because it is a LDPE in the sense that it contains branched polymer chains but the density lies in the ranges that are typical for medium density polyethylenes.

In a first especially preferred embodiment the skin layer or skin layers consist(s) of the LDPE and optionally usual additives.

In a second especially preferred embodiment the skin layer or skin layers consists of a LDPE, one or more thermoplastic polymers increasing stiffness and reducing elongation and optionally usual additives. The thermoplastic polymer(s) increasing stiffness and reducing elongation is (are) preferably chosen from PP, HDPE, polystyrene (PS), styrene-butadien-styrene-copolymers (SBS), and/or cyclic olefin copolymers (COC).

The PP can be a polypropylene homopolymer or a polypropylene copolymer, like a PP random copolymer, as defined above.

HDPE typically has a density of more than 0.94 g/cm³ and should have a tensile modulus of more than 700 MPa.

The PS may be standard homopolymers with suitable flowability for extrusion processing.

The SBS should have a tensile modulus of at least 300 MPa, preferably at least 500 MPa, since butadiene-rich, elastic grades will dramatically reduce the die-cutability.

COC cyclic olefin polymers are known in the art. Exemplary materials are the Topas ® resins form formerly Ticona, now Topas GmbH, located in Germany.

The amount of PP, HDPE, PS, SBS and/or COC used ranges preferably from 1 to 50 % by weight, more preferred from 1 to 25 % by weight and especially preferred from 5 to 15 % by weight. In these ranges sufficient transparency is maintained.

It is further possible to admix minor amounts of m-LLDPE like less than 5 %, preferably less than 3 % for better interlayer adhesion as long as the properties in the Dynatest are as defined.

In a third preferred embodiment the skin layer or skin layers comprise blends or coextruded structures of styrene-butadien-styrene-copolymers with polystyrene. Preferably the skin layer or skin layers consists of a blend of styrene-butadien-styrene-copolymers with 1 to 50 % by weight of polystyrene, preferably 5 to 30 % by weight. For the SBS and PS the same materials as defined above are preferred.

In a fourth preferred embodiment the skin layer(s) consists(consist) of HDPE, especially preferred of a HDPE made with metallocene catalysts.

The skin layer(s) may in all embodiments additionally comprise common additives like colorants, mineralic fillers, processing aids, antistatic agents, antislip agents, stabilizers, antioxidants, acid neutralizing agents, ultraviolet absorbers, antiblocking agents and antifogging agents. The additives are used in their usual amounts, typically up to 5 %, in coloured films up to 10% additives are present.

The skin layer(s) has(have) to be stiff and provide sufficient cuttability. Thus, films made from the skin layer material should show a tensile modulus according to DIN EN ISO 527-3 of more than 300 MPa, preferably more than 350 MPa. The dart drop value according to ASTM 1709 measured on a 50 µm monolayer film of the skin material should be not more than 100 grams, preferably not more than 80 grams.

Typical direct printable skin layers being today applied on PP core layers are consisting usually of blends of mLLDPE or LLDPE with LDPE in order to provide sufficient interlayer adhesion. However those materials are typically not very stiff and are showing a too high ductility as could be seen in the table below (values from data sheets of different resin suppliers, e.g. Exxon and Borealis):

| material | Tensile modulus [MPa] | Dart drop [g] |
|---|---|---|
| LLDPE comonomer buten | 100 - 300 | 140 - 200 |
| LLDPE comonomer hexen | 100 - 300 | 250 - 350 |
| LLDPE comonomer octen | 100 - 300 | 400 - 500 |
| LDPE (< 0.93 g/cm³) | 200 - 280 | 100 - 350 |
| mLLDPE | 100 - 300 | 150 - 1400 |

Other typical skin layers like e.g. PP-Copolymers are not printable in the sense of this invention.

The core layer, especially if coloured, can comprise up to 25 % of additives.

The resulting films have excellent optical properties and very balanced mechanical properties making it ideally suited for label applications like self-adhesive labels, roll-on, shrink-on, or in-mould labels.

Films are manufactured in a manner known as such, e.g. by casting or a blow process. Preferably films are made by the blown film process.

The ratio of the core or base layer thickness to skin layer thickness usually ranges from 1:1 to 15:1, preferably from 1:1 to 5:1, especially from 1:1 to 4:1. Contrary to the prior art teached by DE 19962114 it is possible to use a ratio of the skin layer thickness to the core or base layer thickness of from 1:1 to lower than 1:5 while still achieving sufficient stiffness,

The overall film thickness, i.e. core and two skin layers or base and one skin layer is typically from 20 to 80 µm, preferably from 50 to 70 µm, and may be as low as 20 µm.

In one embodiment the skin layer(s) contains up to 10 % by weight, preferably not more than 5 % by weight, of a polar, anionic or preferably cationic additive to improve printability. Suitable substances are e.g. maleimides of styrene or ionomeric resins like, e.g. Surlyn from DuPont. They build up electrical charge on the surface and hence improve the ink anchorage.

In a further preferred embodiment the film is corona treated to increase printability. Typical conditions are ≥42 g cm/ s² (dyn), preferably ≥44 g cm/ s² (dyn) and especially preferred ≥46 g cm/ s² (dyn). It was found that the standard treatment for polyethylene of 42 g cm/ s² (dyn) does not give the same good results for a propylene random copolymer. Ink adhesion of typical UV- or solvent-based flexo inks is significantly improved by a higher treatment level, especially in combination with a retreatment immediately before printing.

Although it is possible to stretch the film in the machine direction and/or in the cross direction to further increase stiffness this is not necessary according to the invention because of the high stiffness already achieved by choice of the material and way of manufacture. Further, a monoaxial stretching would lead to significantly differing stiffnesses in machine and cross direction. According to the invention these differ by not more than 20 %, preferably not more than 10 %.

Labels can be manufactured from the films in a manner known as such and described in the various patents mentioned hereinbefore. It is to be noted that the films according to the invention can be easily die-cut and can be dispensed easily. They show perfect conformance to uneven contours or during deformation of flexible substrates. Small web printing is easy due to the good ink adhesion and the very good thickness tolerance.

The films according to the invention show the required mechanical properties, specifically a stiffness measured as tensile modulus according to DIN EN ISO 527-3 of at least 600 MPa preferably at least 800 MPa and especially preferred even more than 1000 MPa. For reasons of conformabilty the tensile modulus should not exceed 2000 MPa or preferably not exceed 1500 MPa.

The films show excellent die cuttability. This may be expressed in terms of the Impact values, measured according to DIN 53373. Typically the value ranges from 0,5 to 3 Nm/mm, preferably from 1 to 2 Nm/mm film thickness while at the same time the maximum deflection before breakage is not more than 5 mm.

In a preferred embodiment the optical quality is suitable for transparent labels. The haze (ASTM D 1003) is not mor than 15 %, preferably not more than 10 % and especially preferred not more than 8 %. This means that the film is very clear and transparent. The gloss (ASTM D 2457) at 60° is typically at least 90, preferably at least 100.

The invention will be illustrated further by the following examples. However, it is in no way restricted to the specififc embodiments described therein. Throughout this application, all percentages, are by weight, unless stated otherwise.

### Examples

### Measured properties:

Stiffness and impact values were determined at least 24 hours after extrusion, according to the standards listed below.

### Stiffness

Stiffness was determined as tensile modulus according to DIN EN ISO 527-3, in machine direction (MD) and in cross direction (CD). The measurements are performed at least three weeks after production. The tensile modulus tends to increase for films from materials showing some crystallization after production. The relevant modulus is of course the one after completion of the crystallization since normally it will take some weeks until label stock is manufactured from the film and the labels are dispensed.

### Impact values

The Dynatest was performed according to DIN 53373. The thickness of the specimen is measured and at least five samples are tested. The impact was performed with 4,4 m/s impactor speed on the circumferentially clamped film samples. Via a pressure transducer a curve of impact force vs. film deflection was measured until the film broke. The maximum deflection was determined from the point of the curve where the force has been reduced to 90% of the maximum force just after the samples broke. The impact energy was determined as the integral of the force/deflection curve up to that point. The impact energy is finally standardized by division with the film thickness..

### Die cutting

The die cutting was performed on an industrial machine (Leomat JS400). The cutting angle was 60°. The label dimensions were 79 x 58 mm² with a small matrix width of 3mm. The pressure was set to 700 psi. The cutting behaviour (max. line speed, process reliability) was judged on a scale of 1 (worst) to 10 (best).

The following materials were used:

| **Material** | **MFI** **(g/10 min)** | **Density** **(g/cm³⁾** | **Tensile modulus** **[MPa]** | **Dart drop ASTM 1709** **[g]** |
|---|---|---|---|---|
| PP homopolymer, nucleated | 2.0 | 0.905 | 1600 | <50 |
| Random PP | 1.5 | 0.905 | 800 | 160 |
| LDPE 1 | 3.0 | 0.934 | 380 | 60 |
| LDPE 2 | 1,85 | 0,931 | 300 | 69 |
| mLLDPE 1 | 1,0 | 0,918 | 170 | 1375 |
| SBS | 2,0 | 1,05 | 1300 | <50 |
| COC | 2,0 | 1,02 | 2100 | <50 |

### Example 1:

### Processing conditions:

On a production three-layer coextrusion blown film line films in a width of 2040 mm were produced. The skin layer consisted of LDPE 1 pure or mixtures with m-LLDPE 1 or m-LLDPE 2. The core consisted mainly of PP-homopolymer mixed with either PP-Randomcopolymer or m-LLDPE 1 or 2. The thickness ratio of the core layer to one skin layer of the symmetrical structure was set to 3:1 or 4.5:1. The overall thickness was between 60 and 65 µm. The melt temperature of the core layer was 210 °C and that of the skin layers was 200 °C. The blow-up ratio was 1:2. The air cooling temperature was 11°C for the inner cooling and 8 °C for the outer cooling. The properties mentioned were measured at least 3 weeks after extrusion. The results are shown in table 1 below:

| **Sample #** | **Invention 1** | **Invention 2** | **Invention 3** | **Comp. 1** |
|---|---|---|---|---|
| Thickness [µm] | 64 | 63 | 64 | 64 |
| Thickness ratio | 4,5:1 | 3:1 | 3:1 | 3:1 |
| Skin | pure LDPE 1 | pure LDPE 1 | pure LDPE 1 | 20% m-LLDPE 1 |
| Core | PP Homo-polymer with 20% Random PP | Pure PP Homopolymer | PP Homo-polymer with 15% m-LLDPE 1 | PP Homo-polymer with 10% m-LLDPE 1 |
| Tensile Modulus MD [MPa] | 1112 | 1031 | 1011 | 939 |
| Deflection [mm] | 3,53 | 4,58 | 4,97 | 7,67 |
| Impact energy [Nm/mm] | 1,29 | 1,95 | 2, 30 | 4,27 |
| Die cutting rating | 7,5 | 8,5 | 6,5 | 5 |

It can be clearly seen that films according to the invention (with low ductility due to the absence of m-LLDPE in the skin) show higher stiffness. Furthermore, the die cutting performance correlates with the measured impact energy and deflection and was much better.

### Example 2:

Further comparison examples were taken from market samples being used in the label industry or being in the market introduction.

Table 2 below shows the results of the measurements described above.

| **Sample #** | **Comp. 2 Nordenia** | **Comp. 3 Nordenia** | **Comp. 3 Innovia** | **Comp. 4 Renolit** | **Comp 5 RKW AG** |
|---|---|---|---|---|---|
| Thickness [µm] | 85 | 60 | 56 | 89 | 95 |
| Process | Blown | Blown | Biaxial stretched | Cast | Blown |
| Skin | LDPE | LLDPE | PP | LDPE | LDPE |
| Core | LDPE/HDPE | PP | PP | LDPE/PP | LDPE |
| Tensile Modulus MD [MPa] | 452 | 1014 | 1084 | 381 | 269 |
| Deflection [mm] | 6,48 | 8,76 | 13,69 | 6,16 | 7,73 |
| Impact energy [Nm/mm] | 2,75 | 5,72 | 39, 81 | 2,25 | 3,312 |
| Die cutting rating | 9 | 4,5 | 5 | 9 | 9 |

It can be clearly seen that there are today no down gauged (<80 µm) and stiff (>600 MPa) labels on the market that are easily die-cuttable and conformable (stiffness <1500 MPa).

### Example 3:

The cuttability of the LDPE as skin layer can be further optimized by adding a stiff, transparent and less ductile material. This could be either a cyclic polyolefin copolymer (COC according to table 1) or a styrene-butadiene-styrene block-copolymer (SBS) mixed with 25% of standard polystyrene. For test purposes films have been extruded on a laboratory blown film extruder in a thickness of 50 µm of pure LDPE 2, a blend of this LDPE 2 with 10% COC and a blend of SBS/PS. The properties of these monolayer films have been measured and are summarized below.

| **Sample #** | **LDPE 2** | **LDPE 2 plus 10% COC** | **SBS plus 25% PS** |
|---|---|---|---|
| Thickness [µm] | 52 | 53 | 47 |
| Elongation MD [%] | 372 | 212 | 16 |
| Elongation CD [%] | 633 | 243 | 40 |
| Tensile Modulus MD [MPa] | 302 | 455 | 1308 |
| Deflection [mm] | 7,51 | 6,59 | 2,63 |
| Impact energy [Nm/mm] | 3,61 | 3,10 | 0,96 |

It can be seen that both alternatives are leading to products with a higher or much higher stiffness (good dispensability) and lower elongation at break, impact energy and deflection (good cuttability). It has been found that these skin layers are showing sufficient adhesion on a mainly PP-based core layer for the use as pressure sensitive label film.

## Claims

1. Multilayer film useful as label facestock that is stiff, coextruded and has an ink-printable skin layer or ink-printable skin layers bonded to the base or core layer without intermediate layers **characterized in that** the core or base layer comprises at least 50 % by weight of of at least one of a polypropylene homo-polymer, a polypropylene random copolymer or a heterophasic polypropylene copolymer and the skin layer(s) is (are) stiff and die cuttable and comprises (comprise) low density polyethylene with a density of at least 0.93 g/cm³ and less than 5 % by weight of metallocene linear low density polyethylene whereby the film has a thickness of up to 80 µm, a tensile modulus according to DIN EN ISO 527-3 of from 600 to 1500 MPa, and the impact energy according to DIN 53373 is not more than 3 Nm/mm film thickness and the maximum deflection according to DIN 53373 is not more than 5 mm.

2. Film according to claim 1, **characterized in that** the core or base layer is a mixture of 1-50 % by weight polypropylene random copolymer and polypropylene homopolymer with up to 25 % by weight of common additives.

3. Film according to claim 1, **characterized in that** the core layer is a mixture of polypropylene random coplymer, heterophasic polypropylene copolymer or polypropylene homopolymer with up to 40% by weight of (metallocene) linear low density polyethylene and up to 25 % by weight of common additives.

4. Film according to any one of claims 1 to 3, **characterized in that** the core or base layer comprises an amount of up to 80 % by weight of polypropylene random copolymer and 20 to 100 % by weight of polypropylene homopolymer.

5. Film according to any one of claims 1 to 4, **characterized in that** the skin layer(s) consists (consist) of low density polyethylene with a density of at least 0.93 g/cm³ and up to 10 % by weight common additives.

6. Film according to any one of claims 1 to 4, **characterized in that** the skin layer(s) consists (consist) of a mixture of low density polyethylene with polypropylene, high density polyethylene, polystyrene, styrene-butadiene-styrene-copolymers, and/or cyclic olefin copolymer and up to 10 % by weight common additives.

7. Film according to any one of claims 1 to 6. **characterized in that** the skin layer is corona-treated with at least 42 g cm / s² (dyn), preferably at least 44 g cm / s² (dyn), especially at least 46 g cm / s² (dyn).

8. Film according to any one of claims 1 to 7, **characterized in that** the ratio of the skin layer thickness to the core or base layer thickness is set to between 1:1 and 1:4.

9. Film according to any one of claims 1 to 8, **characterized in that** the common additives are one or more of colorants, mineralic fillers, processing aids, antistatic agents, antislip agents, stabilizers, antioxidants, acid neutralizing agents, ultraviolet absorbers, antiblocking agents and antifogging agents.

10. Film according to any one of claims 1 to 9, **characterized in that** the additive comprises a polar, anionic or cationic substance that improves printability.

11. Film according to any one of claims 1 to 10, **characterized in that** the film is not stretched.

12. Film according to any one of claims 1 to 11, **characterized in that** the film is a blown film.

13. Use of the film according to any one of claims 1 to 12 as label facestock for self-adhesive, wrap-around, roll-on, shrink-on, or in-mould label applications.

14. Method of assessing die cuttability of films for label facestock, **characterized in that** the impact energy and the maximum deflection according to DIN 53373 are measured and films are selected as suitable where the impact energy is not more than 3 Nm/mm film thickness and the maximum deflection is not more than 5 mm.

## Patentansprüche

1. Als Etikettenmaterial geeignete, mehrlagige Folie, die steif und koextrudiert ist und eine Tinten-bedruckbare Deckschicht oder Tinten-bedruckbare Deckschichten aufweist, die ohne Zwischenlagen an die Basis- oder Kernschicht gebunden ist (sind), **dadurch gekennzeichnet, dass** die Kern- oder Basisschicht wenigstens 50 Gew.-% wenigstens eines Polypropylenhomopolymers, eines Polypropylen-Randomcopolymers oder eines heterophasischen Polypropylencopolymers umfasst und die Randschicht(en) steif und stanzbar ist(sind) und Polyethylen niederer Dichte mit einer Dichte von wenigstens 0,93 g/cm³ und weniger als 5 Gew.-% lineares Metallocen-Polyethylen niederer Dichte umfasst(umfassen), wobei die Folie eine Dicke von bis zu 80 µm hat, ein Zugmodul gemäß DIN EN ISO 527-3 von 600 bis 1500 MPa und die Durchstoßenergie gemäß DIN 53375 nicht mehr als 3 Nm/mm Foliendicke beträgt und die maximale Verformung gemäß DIN 53373 nicht mehr als 5 mm beträgt.

2. Folie gemäß Anspruch 1, **dadurch gekennzeichnet, dass** die Kern- oder Basisschicht eine Mischung 1 - 50 Gew.-% Polypropylen-Randomcopolymer und Polypropylenhomopolymer mit bis zu 25 Gew.-% üblichen Additiven ist.

3. Folie gemäß Anspruch 1, **dadurch gekennzeichnet, dass** die Kernschicht eine Mischung aus Polypropylen-Randomcopolymer, heterophasischem Polypropylencopolymer oder Polypropylenhomopolymer mit bis zu 40 Gew.-% linearem (Metallocen-)Polyethylen niederer Dichte und bis zu 25 Gew.-% üblichen Additiven ist.

4. Folie gemäß einem der Ansprüche 1 bis 3, **dadurch gekennzeichnet, dass** die Kern- oder Basisschicht eine Menge von bis zu 80 Gew.-% Polypropylen-Randomcopolymer und 20 bis 100 Gew.-% Polypropylenhomopolymer umfasst.

5. Folie gemäß einem der Ansprüche 1 bis 4, **dadurch gekennzeichnet, dass** die Deckschicht(en) aus Polyethylen niederer Dichte mit einer Dichte von wenigstens 0,93 g/cm³ und bis zu 10 Gew.-% üblichen Additiven besteht(bestehen).

6. Folie gemäß einem der Ansprüche 1 bis 4, **dadurch gekennzeichnet, dass** die Deckschicht(en) aus einer Mischung von Polyethylen niederer Dichte mit Polypropylen, Polyethylen hoher Dichte, Polystyrol, Styrol-Butadien-Styrol-Copolymer und/oder zyklischem Olefincopolymer und bis zu 10 Gew.-% üblichen Additiven besteht(bestehen).

7. Folie gemäß einem der Ansprüche 1 bis 6, **dadurch gekennzeichnet, dass** die Deckschicht mit wenigstens 42 g cm/ s² (dyn), vorzugsweise mit wenigstens 44 g cm/ s² (dyn), insbesondere mit wenigstens 46 g cm/ s² (dyn), Korona-behandelt ist.

8. Folie gemäß einem der Ansprüche 1 bis 7, **dadurch gekennzeichnet, dass** das Verhältnis der Dicke der Deckschicht zu der der Kern- oder Basisschicht auf zwischen 1:1 und 1:4 eingestellt wird.

9. Folie gemäß einem der Ansprüche 1 bis 8, **dadurch gekennzeichnet, dass** die üblichen Additive eines oder mehrere von Farbstoffen, mineralischen Füllstoffen, Verarbeitungshilfsmitteln, Antistatika, Gleitschutzmitteln, Stabilisierern, Antioxidantien, Säureneutralisierungsmitteln, UV-Absorbern, Antiblockmitteln und Beschlagschutzmitteln sind.

10. Folie gemäß einem der Ansprüche 1 bis 9, **dadurch gekennzeichnet, dass** die Additive eine polare, anionische oder kationische Substanz umfassen, welche die Bedruckbarkeit verbessert.

11. Folie gemäß einem der Ansprüche 1 bis 10, **dadurch gekennzeichnet, dass** die Folie nicht gereckt ist.

12. Folie gemäß einem der Ansprüche 1 bis 11, **dadurch gekennzeichnet, dass** die Folie eine Blasfolie ist.

13. Verwendung einer Folie gemäß einem der Ansprüche 1 bis 12 als Etikettenmaterial für selbstklebende, Rundum-, Aufroll-, Aufschrumpf- oder Hinterspritz-Etiketten.

14. Verfahren zur Bestimmung der Stanzbarkeit von Folien für Etikettenmaterial, **dadurch gekennzeichnet, dass** die Durchstoßenergie und die maximale Verformung gemäß DIN 53375 gemessen und Folien als geeignet ausgewählt werden, wenn die Durchstoßenergie nicht mehr als 3 Nm/mm Foliendicke beträgt und die maximale Verformung nicht mehr als 5 mm beträgt.

## Revendications

1. Film multicouches utile comme frontal d'étiquette qui est rigide, coextrudé et présente une couche extérieure ou des couches entirieures pouvant être imprimée(s) à l'encre liée(s) à la couche de base ou de coeur sans couches intermédiaires, **caractérisé en ce que** la couche de coeur ou de base est composée à raison d'au moins 50% en poids d'au moins un parmi un homopolymère de polypropylène, un copolymère statistique de polypropylène ou un copolymère de polypropylène hétérophasique et la(les) couche(s) extérieure(s) est(sont) rigide(s) et peut(peuvent) être coupée(s) avec une matrice et comprend/comprennent du polyéthylène basse densité, présentant une densité d'au moins 0,93 g/cm³ et moins de 5% en poids de polyéthylène basse densité linéaire métallocène, où le film présente une épaisseur allant jusqu'à 80 µm, un module de traction selon la norme DIN EN ISO 527-3 de 600 à 1500 MPa, et la résistance à la perforation selon la norme DIN 53373 n'est pas supérieure à 3 Nm/mm d'épaisseur de film et la déformation maximale selon la norme DIN 53373 n'est pas supérieure à 5 mm.

2. Film selon la revendication 1, **caractérisé en ce que** la couche de coeur ou de base est un mélange de 1-50% en poids de copolymère statistique de polypropylène et d'homopolymère de polypropylène comprenant jusqu'à 25% en poids d'additifs ordinaires.

3. Film selon la revendication 1, **caractérisé en ce que** la couche de coeur est un mélange de copolymère statistique de polypropylène, de copolymère de polypropylène hétérophasique ou d'homopolymère de polypropylène comprenant jusqu'à 40% en poids de polyéthylène basse densité linéaire (métallocène) et jusqu'à 25% en poids d'additifs ordinaires.

4. Film selon l'une quelconque des revendications 1 à 3, **caractérisé en ce que** la couche de coeur ou de base est composé d'une quantité de jusqu'à 80% en poids de copolymère statistique de polypropylène et de 20 à 100% en poids d'homopolymère de polypropylène.

5. Film selon l'une quelconque des revendications 1 à 4, **caractérisé en ce que** la(les) couche(s) de coeur est(sont) constituée(s) de polyéthylène basse densité présentant une densité d'au moins 0,93 g/cm³ et de jusqu'à 10% en poids d'additifs ordinaires.

6. Film selon l'une quelconque des revendications 1 à 4, **caractérisé en ce que** la(les) couche(s) extérieure est(sont) constituée(s) d'un mélange de polyéthylène basse densité avec du polypropylène, du polyéthylène haute densité, du polystyrène, des copolymères de styrène-butadiène-styrène et/ou de copolymère d'oléfines cycliques et de jusqu'à 10% en poids d'additifs ordinaires.

7. Film selon l'une quelconque des revendications 1 à 6, **caractérisé en ce que** la couche extérieure est traitée au corona, présentant au moins 42 g cm/s² (dyn), de préférence au moins 44 g cm/s² (dyn), en particulier au moins 46 g cm/s² (dyn).

8. Film selon l'une quelconque des revendications 1 à 7, **caractérisé en ce que** le rapport de l'épaisseur de la couche extérieure à l'épaisseur de la couche de coeur ou de base est réglé entre 1:1 et 1:4.

9. Film selon l'une quelconque des revendications 1 à 8, **caractérisé en ce que** les additifs ordinaires sont un(e) ou plusieurs colorants, charges minérales, adjuvants de transformation, agents antistatiques, agents anti-glissement, agents de stabilisation, antioxydants, agents de neutralisation des acides, absorbants des ultraviolets, agents antiadhésifs et agents antibuée.

10. Film selon l'une quelconque des revendications 1 à 9, **caractérisé en ce que** l'additif comprend une substance polaire, anionique ou cationique qui améliore l'aptitude à l'impression.

11. Film selon l'une quelconque des revendications 1 à 10, **caractérisé en ce que** le film n'est pas étiré.

12. Film selon l'une quelconque des revendications 1 à 11, **caractérisé en ce que** le film est un film soufflé.

13. Utilisation du film selon l'une quelconque des revendications 1 à 12 comme frontale d'étiquette pour des applications d'étiquettes autoadhésives, enveloppantes, sur bande, rétractables ou dans le moule.

14. Procédé d'évaluation de l'aptitude au découpage par une matrice de films pour le frontal d'étiquettes, **caractérisé en ce que** la résistance à la perforation et la déformation maximale selon la norme DIN 53373 sont mesurées et les films sont sélectionnés comme appropriés lorsque la résistance à la perforation n'est pas supérieure à 3 Nm/mm d'épaisseur de film et la déformation maximale n'est pas supérieure à 5 mm.
